# FASCICULE DE BREVET EUROPEEN

(11) **EP 3 259 086 B1**
(45) Date de publication et mention de la délivrance du brevet: **01.04.2020**
(21) Numéro de dépôt: 16705107.7
(22) Date de dépôt: 15.02.2016
(51) Int. Cl.: B22F 3/105, B33Y 30/00, B33Y 10/00, B33Y 40/00, B29C 64/35, B29C 64/153

(54) **PROCEDE DE GESTION D'UNE POUDRE DANS UNE INSTALLATION DE FABRICATION ADDITIVE COMPRENANT UNE PLURALITE DE MACHINES**
VERFAHREN ZUR HANDHABUNG EINES PULVERS IN EINER GENERATIVE FERTIGUNGSANLAGE MIT EINER VIELZAHL VON MASCHINEN
METHOD FOR MANAGING A POWDER IN AN ADDITIVE MANUFACTURING FACILITY COMPRISING A PLURALITY OF MACHINES

(30) Priorité: 16.02.2015 FR 1551277
(43) Date de publication de la demande: 27.12.2017
(73) Titulaire: Compagnie Générale des Etablissements Michelin, 63000 Clermont-Ferrand (FR)
(72) Inventeur: DE LAJUDIE, Christophe, 63040 Clermont-Ferrand Cedex 9 (FR); PETITJEAN, Jean-Luc, 63040 Clermont-Ferrand Cedex 9 (FR); GEAY, Christian, 63040 Clermont-Ferrand Cedex 9 (FR)
(74) Mandataire: Noel, Luminita
(86) Numéro de dépôt international: PCT/EP2016/053198
(87) Numéro de publication internationale: WO 2016/131785

(56) Documents cités:
- DE-A1-102011 088 158
- DE-U1- 20 107 262
- US-B2- 7 887 316

## Description

L'invention se situe dans le domaine de la fabrication additive à base de poudre par frittage ou fusion des grains de cette poudre à l'aide d'un faisceau énergétique à rayonnement électromagnétique, comme par exemple un faisceau laser, et/ou d'un faisceau de particules, comme par exemple un faisceau d'électrons.

Plus précisément, l'invention concerne la gestion d'une poudre au sein d'une installation de fabrication additive comprenant une pluralité de machines de fabrication additive, cette gestion comprenant au moins l'alimentation en poudre des différentes machines et le recyclage de l'excédent de mise en couche de la poudre généré par les opérations de fabrication additive se déroulant à l'intérieur de chaque machine.

Dans le cadre de la fabrication additive à base de poudre, une pièce est fabriquée en consolidant cette poudre selon un motif prédéterminé, couche après couche, à l'aide d'un faisceau énergétique et/ou d'un faisceau de particules. Aussi, une machine de fabrication additive comprend au moins des moyens d'émission d'un faisceau laser et/ou de particules, un dispositif de mise en couche de la poudre dans la zone de travail du faisceau laser et/ou de particules, et des moyens alimentant en poudre le dispositif de mise en couche.

Par exemple, dans les machines de fabrication additive décrites dans les documents WO-2013/178825 et WO-2013/092757, le dispositif de mise en couche comprend des moyens de répartition de la poudre aptes à parcourir la zone de travail afin de répartir la poudre en une couche d'épaisseur finale adaptée à la fabrication additive, des moyens d'alimentation aptes à transférer la poudre par gravité aux moyens de répartition, et des moyens de dosage aptes à contrôler la quantité de poudre transférée aux moyens de répartition. Ce sont précisément les moyens de répartition de la poudre et leur principe de fonctionnement qui sont à l'origine de l'excédent de mise en couche de la poudre généré par chaque machine lors d'un cycle de fabrication additive. En effet, afin d'obtenir des couches de poudre d'épaisseur uniforme, ces moyens de répartition déposent une couche de poudre d'épaisseur plus importante que l'épaisseur exigée, puis la surépaisseur de poudre déposée est évacuée par balayage avec un rouleau ou une raclette. Parallèlement, dans ces documents WO-2013/178825 et WO-2013/092757, les moyens de stockage comprennent au moins une trémie mobile avec les moyens d'alimentation, les moyens de dosage et les moyens de répartition.

Selon une première méthode, la trémie des moyens d'alimentation peut être remplie de poudre manuellement par un opérateur avant chaque cycle de fabrication additive.

D'un point de vue industriel, cette première méthode manuelle est peu intéressante car elle ne permet pas d'approvisionner les moyens d'alimentation de la machine en temps masqué, la machine devant être à l'arrêt pour permettre à l'opérateur d'accéder à la trémie des moyens d'alimentation.

De plus, et malgré toutes les précautions d'usage, un tel approvisionnement manuel des machines soumet l'opérateur à des risques d'inhalation de poudre alors que certaines poudres utilisées en fabrication additive peuvent contenir des substances toxiques.

Aussi, une meilleure solution consiste à automatiser l'approvisionnement en poudre des moyens d'alimentation d'un dispositif de mise en couche d'une machine de fabrication additive. C'est par exemple ce qui est prévu dans les documents US-7.296.599 et US-7.887.316.

Plus en détail, dans ces documents US-7.296.599 et US-7.887.316, il est prévu d'approvisionner automatiquement une ou plusieurs machines de fabrication additive avec une poudre neuve et/ou avec une poudre dite de récupération car issue du nettoyage des pièces réalisées précédemment par fabrication additive et du support sur lequel elles ont été fabriquées.

Etrangement, si ces documents US-7.296.599 et US-7.887.316 prévoient d'approvisionner automatiquement une ou plusieurs machines de fabrication additive depuis un même dispositif extérieur d'approvisionnement nommé « Powder Processing Unit », aucun de ces deux documents ne précise concrètement l'agencement d'un circuit d'approvisionnement reliant le dispositif extérieur d'approvisionnement à plusieurs machines de fabrication additive.

Le document US-7.296.599 vise plus précisément le transport pneumatique de la poudre neuve depuis un container de stockage vers le « Powder Processing Unit ». Selon ce document US-7.296.599, le transport pneumatique de la poudre neuve est effectué en refoulant la poudre à l'aide d'air comprimé.

Un tel transport par air comprimé est un inconvénient dans le cas du transport de poudres toxiques, car en cas de fuite dans le circuit de transport, l'air comprimé expulsera automatiquement les grains de poudre toxique vers l'extérieur du circuit, où la pression de l'air est moins élevée et où les grains de poudre toxique sont susceptibles d'être inhalés par des opérateurs ou d'autres personnes situées à proximité.

De plus, le document US-7.296.599 ne prévoyant pas de traitement de l'air utilisé pour transporter la poudre neuve, l'eau contenue dans cet air est susceptible d'humidifier la poudre, ce qui peut nuire à la qualité des pièces fabriquées ensuite avec cette poudre.

De son côté, le document US-7.887.316 vise plus particulièrement le recyclage de la poudre utilisée lors de chaque cycle de fabrication additive.

D'une part, ce document US-7.887.316 prévoit de recycler l'excédent de mise en couche de la poudre, aussi appelé poudre excédentaire, directement à l'intérieur d'une machine de fabrication additive en renvoyant cette poudre excédentaire directement, via un dispositif de transport en phase dense, vers les moyens alimentant le dispositif de mise en couche de cette machine.

Ce document US-7.887.316 précise qu'un transport en phase dense est un transport de la poudre avec un gaz circulant à une basse vitesse comprise entre 5 et 10 m/s, par opposition à un transport en phase diluée s'effectuant avec un gaz circulant à une haute vitesse comprise entre 20 et 30 m/s.

Bien que permettant de recycler facilement une partie de la poudre utilisée lors d'un cycle de fabrication additive, le recyclage interne décrit dans ce document US-7.887.316 ne prévoit pas d'opération de contrôle de la granulation de la poudre excédentaire avant sa réutilisation. Or, cette poudre excédentaire peut contenir des grains de poudre agglomérés lors de la consolidation d'une précédente couche de poudre, et ces agglomérats de poudre peuvent nuire à la qualité des pièces fabriquées ultérieurement avec cette poudre excédentaire.

Parallèlement, les moyens de mise en oeuvre de ce recyclage interne sont une source de vibrations et d'impuretés susceptibles de gêner le bon fonctionnement de la machine et de son dispositif de mise en couche de la poudre.

Enfin, les moyens de mise en oeuvre de ce recyclage interne représentent un surcoût d'équipement par machine, surcoût qui serait encore plus important si ce recyclage interne intégrait des moyens de contrôle de la granulation de la poudre excédentaire.

D'autre part, ce document US-7.887.316 prévoit aussi de réutiliser la poudre de récupération issue du nettoyage des pièces fabriquées et de leur support de fabrication en mélangeant cette poudre de récupération avec de la poudre neuve et en redistribuant ce mélange pulvérulent aux machines de fabrication additive.

Comme le document US-7.296.599, ce document US-7.887.316 ne prévoit pas de contrôle de la granulation du mélange de poudres avant sa réutilisation.

Toutefois, le document DE-201.07.262, cité dans ce document US-7.887.316, prévoit de tamiser la poudre excédentaire et la poudre de récupération avant de les mélanger avec de la poudre neuve et de réutiliser ce mélange dans une machine de fabrication additive.

Ensuite, et comme pour le recyclage de la poudre excédentaire, ce document US-7.887.316 prévoit un transport par phase dense de la poudre de récupération lors de son recyclage.

Selon ce document US-7.887.316, le transport par phase dense est jugé plus productif car sa mise en oeuvre nécessite de déplacer moins d'air qu'un transport en phase diluée.

Toutefois, le transport en phase dense peut s'avérer problématique dans le cas d'une poudre métallique très dense car des bouchons de poudre peuvent se former facilement dans les conduites du circuit de transport en raison du faible débit d'air utilisé. De plus, si le bouchon se désagrège et forme un lit de poudre dans le conduit de transport, le faible débit d'air ne permettra pas de déplacer ce lit de poudre.

Selon un autre inconvénient, le transport en phase dense ne permet pas de transporter la poudre sur de grandes distances, ce qui peut s'avérer nécessaire dans le cadre d'une installation ou d'un atelier comprenant une pluralité de machines de fabrication additive.

Parallèlement, et même si ce document US-7.887.316 envisage l'utilisation d'un gaz de transport inerte comme l'azote, l'argon, ou le dioxyde de carbone, ce document US-7.887.316 indique aussi que le gaz de transport utilisé de préférence est de l'air, mais sans spécifier de traitement particulier de l'air utilisé pour transporter la poudre. Donc, l'eau contenue dans cet air non traité peut venir humidifier la poudre transportée et conduire à la fabrication de pièces de mauvaise qualité.

Enfin, aucun des documents US-7.296.599 ou US-7.887.316 ne prévoit de traitement visant à maitriser le degré d'hygrométrie de la poudre qu'elle soit recyclée et/ou neuve, alors qu'une poudre humide peut aussi conduire à la fabrication de pièces de mauvaise qualité.

Si le document DE-201.07.262 prévoit de centraliser le recyclage des poudres excédentaire et de récupération, il multiplie désavantageusement les circuits de collecte et de distribution des différentes poudres, ce qui augmente les risques de fuite de poudre, et donc les risques sanitaires, et complexifie l'entretien et la maintenance de l'installation.

L'invention a pour objectif de pallier au moins l'un des inconvénients des dispositifs décrits dans ces documents de l'art antérieur.

A cet effet, l'invention a pour objet un procédé de gestion d'une poudre au sein d'une installation de fabrication additive comprenant une pluralité de machines de fabrication additive selon la revendication 1, le procédé de gestion prévoyant de stocker un volume de poudre d'alimentation et d'alimenter automatiquement en poudre les différentes machines de l'installation à partir de ce volume de poudre d'alimentation, la poudre délivrée à chaque machine subissant au moins une mise en couche au cours d'un cycle de fabrication additive mis en oeuvre dans cette machine, et cette opération de mise en couche s'effectuant en déposant la poudre en excès et en écartant la partie excédentaire de la poudre déposée, dite poudre excédentaire, le procédé de gestion prévoyant de collecter la poudre excédentaire écartée au sein de chaque machine de l'installation et de conduire la poudre excédentaire collectée depuis chaque machine jusqu'au volume de poudre d'alimentation, et le procédé de gestion prévoyant en outre de réintroduire dans le volume de poudre d'alimentation une poudre de récupération issue du nettoyage des pièces brutes fabriquées par les machines de l'installation, et le procédé de gestion prévoyant de conduire via un même circuit de collecte la poudre excédentaire et la poudre de récupération jusqu'au volume de poudre d'alimentation. Selon l'invention, le procédé de gestion se caractérise en ce qu'il prévoit de distribuer aux différentes machines de l'installation un mélange de poudre neuve, de poudre de récupération et de poudre excédentaire, et en ce qu'il prévoit de préparer la poudre issue de ce mélange avant de la distribuer aux machines de l'installation, la poudre étant séchée entre le volume de poudre d'alimentation et chaque machine de l'installation, et la poudre étant tamisée entre le volume de poudre d'alimentation et chaque machine de l'installation.

Grâce à cette mutualisation de la collecte de la poudre excédentaire, il n'est plus nécessaire que chaque machine de fabrication additive soit équipée d'un dispositif de recyclage interne qui est une source nuisible de vibrations et d'impuretés, et qui augmente le coût de chaque machine. De plus, en mutualisant la collecte de la poudre excédentaire et de la poudre de récupération, il est aussi possible de centraliser le traitement de ces poudres avant leur réutilisation. De manière générale, la mutualisation de la collecte des différentes poudres réduit le coût de l'installation ainsi que les risques de fuite de poudre, et elle facilite la maintenance de l'installation.

Afin d'éviter toute fuite des poudres collectées vers l'extérieur du circuit utilisé pour les transporter, le procédé de gestion prévoit de transporter la poudre excédentaire et la poudre de récupération de manière pneumatique et sous vide jusqu'au volume de poudre d'alimentation.

De préférence, le procédé de gestion prévoit aussi de transporter les poudres collectées en phase diluée jusqu'au volume de poudre d'alimentation afin d'éviter l'apparition de bouchons dans le circuit utilisé pour transporter les poudres collectées.

Dans le cadre de la mise en oeuvre de l'alimentation en poudre des différentes machines depuis le volume de poudre d'alimentation, le procédé de gestion prévoit un transport de la poudre gravitaire ou pneumatique et sous vide. Ainsi, on évite les risques de fuite de poudre qui seraient liées à l'utilisation d'air comprimé dans le circuit conduisant la poudre du volume de poudre d'alimentation vers les différentes machines.

De préférence, le transport pneumatique et sous vide de la poudre entre le volume de poudre d'alimentation et les différentes machines s'effectue avec de l'air sec ou un gaz inerte afin d'éviter d'humidifier la poudre transportée.

Enfin, le procédé de gestion prévoit aussi d'introduire de la poudre neuve dans le volume de poudre d'alimentation, cette poudre neuve étant mélangée avec la poudre excédentaire collectée et la poudre de récupération, et donc séchée et tamisée au même titre que ces poudres issues de recyclage.

L'invention a aussi pour objet une installation selon la revendication 7, permettant de mettre en œuvre ce procédé de gestion, cette installation comprenant une pluralité de machines de fabrication additive, un dispositif de stockage d'un volume de poudre d'alimentation et un dispositif d'alimentation alimentant automatiquement en poudre les différentes machines de l'installation à partir de ce volume de poudre d'alimentation, chaque machine de fabrication additive comprenant un dispositif de mise en couche de la poudre délivrée à cette machine, et chaque dispositif de mise en couche de chaque machine déposant la poudre en excès et écartant la partie excédentaire de la poudre déposée, dite poudre excédentaire, l'installation comprenant un circuit de collecte de la poudre excédentaire écartée par chaque dispositif de mise en couche de chaque machine, ce circuit de collecte permettant de transporter la poudre excédentaire collectée depuis chaque machine jusqu'au volume de poudre d'alimentation, l'installation comprenant en outre un dispositif de nettoyage des pièces brutes fabriquées par les machines de l'installation et permettant de récupérer une poudre, dite poudre de récupération, lors du nettoyage de ces pièces, et le dispositif de nettoyage étant relié au circuit de collecte de la poudre excédentaire de manière à introduire la poudre de récupération dans ce circuit de collecte. Selon l'invention, l'installation se caractérise en ce que le dispositif d'alimentation comprend un premier circuit de préparation de la poudre suivi d'un second circuit de distribution de la poudre préparée aux différentes machines de l'installation, le circuit de préparation reliant le volume de poudre d'alimentation au circuit de distribution, et le circuit de distribution reliant le circuit de préparation à chaque machine de l'installation, et en ce que le circuit de préparation comprend un dispositif de séchage de la poudre et un dispositif de tamisage de la poudre.

De préférence, le circuit de collecte comprend un unique conduit de collecte reliant chaque machine de l'installation au volume de poudre d'alimentation et des moyens de génération de vide permettant de transporter la poudre excédentaire collectée de manière pneumatique et sous vide dans ce conduit de collecte.

De préférence encore, les moyens de génération de vide permettent de transporter la poudre excédentaire collectée en phase diluée dans le conduit de collecte.

De préférence, au moins une portion du circuit de préparation est agencée de manière à transporter la poudre par gravité, et le circuit de préparation comprend aussi des moyens de génération de vide permettant de transporter la poudre de manière pneumatique et sous vide dans au moins une portion de ce circuit de préparation.

De préférence encore, le circuit de distribution comprend un conduit de distribution relié au circuit de préparation et à chaque machine de l'installation, et des moyens de génération de vide permettant de transporter la poudre de manière pneumatique et sous vide dans ce conduit de distribution.

En vue de faciliter la réutilisation du gaz de transport utilisé dans le circuit de distribution, ce circuit de distribution prend la forme d'un circuit fermé.

Enfin, pour compenser le volume des agrégats de poudre non-recyclable évacués en tant que déchets par le dispositif de tamisage et le volume de poudre utile à la fabrication additive, l'installation comprend en outre un dispositif de stockage d'un volume de poudre neuve relié au dispositif de stockage du volume de poudre d'alimentation.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une représentation schématique simplifiée d'une pluralité de machines de fabrication additive alimentées en poudre au sein d'une installation selon l'invention, et
- la figure 2 est une représentation schématique plus détaillée d'une pluralité de machines de fabrication additive alimentées en poudre au sein d'une installation selon l'invention.

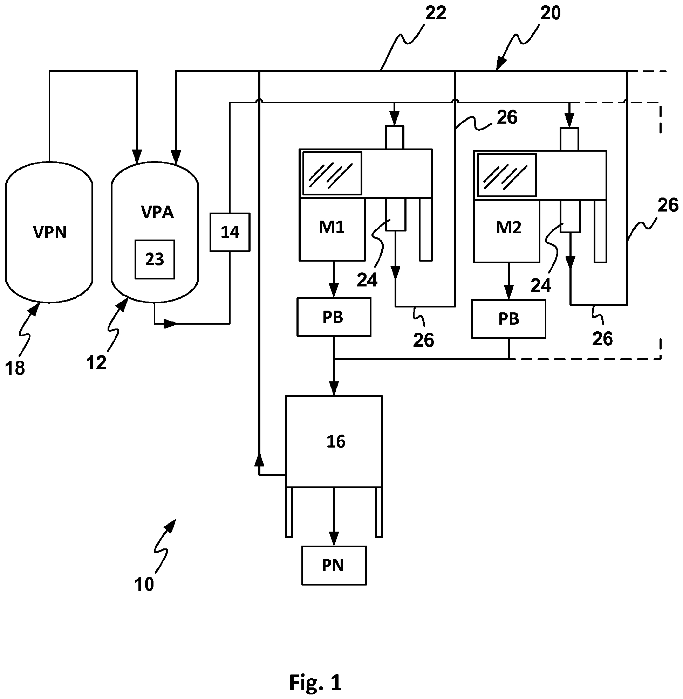

Comme l'illustre la figure 1, l'invention est relative à une installation 10 comprenant une pluralité de machines M1,M2 de fabrication additive devant être alimentées en poudre.

A cet effet, l'installation 10 comprend un dispositif de stockage 12 d'un volume de poudre d'alimentation VPA et un dispositif d'alimentation 14 alimentant automatiquement en poudre les différentes machines M1,M2 de l'installation à partir de ce volume de poudre d'alimentation VPA.

De façon connue, et comme cela est par exemple décrit dans les documents WO-2013/178825 et WO-2013/092757, une machine M1,M2 de fabrication additive comprend au moins des moyens d'émission d'un faisceau laser et/ou de particules, un dispositif de mise en couche de la poudre dans la zone de travail du faisceau laser et/ou de particules, et des moyens alimentant en poudre le dispositif de mise en couche, par exemple à partir de la poudre délivrée à cette machine par le dispositif d'alimentation 14.

Toujours de façon connue, lors de la fabrication additive de pièces au sein de chaque machine M1,M2, chaque dispositif de mise en couche de chaque machine M1,M2 dépose la poudre en excès et écarte la partie excédentaire de la poudre déposée, dite poudre excédentaire, afin d'obtenir une couche de poudre la plus uniforme possible.

Une fois le cycle de fabrication additive achevé au sein de chaque machine M1,M2, les pièces brutes PB sont extraites de la machine M1,M2 afin d'être nettoyées et séparées de la poudre non consolidée qui les entoure. En effet, les pièces brutes PB sont généralement extraites d'une machine M1,M2 dans le contenant dans lequel elles ont été fabriquées, et donc noyées au milieu de la poudre non écartée par le dispositif de mise en couche et non consolidée par le faisceau laser et/ou de particules.

Aussi, l'installation 10 comprend un dispositif de nettoyage 16 des pièces brutes PB fabriquées par les machines M1,M2 de l'installation. Ce dispositif de nettoyage 16 permet de séparer les pièces brutes PB de la poudre non consolidée qui les entoure et donc de récupérer cette poudre, dite poudre de récupération, lors du nettoyage de ces pièces brutes PB. Une fois séparées de la poudre de récupération, les pièces nettoyées PN sont évacuées vers un lieu de stockage ou vers un autre dispositif.

Enfin, l'installation 10 comprend en outre un dispositif de stockage 18 d'un volume de poudre neuve VPN relié au dispositif de stockage 12 du volume de poudre d'alimentation VPA. Ce volume de poudre neuve VPN est utilisé pour réapprovisionner au besoin le volume de poudre d'alimentation VPA.

Avantageusement, comme l'invention prévoit de collecter et de réutiliser la poudre excédentaire écartée par les dispositifs de mise en couche des différentes machines M1,M2 ainsi que la poudre de récupération issue du nettoyage des pièces brutes PB fabriquées, le volume de poudre neuve VPN sert presque uniquement à compenser le volume de poudre transformé en pièces brutes PB par les machines M1,M2 de l'installation. En effet, l'invention prévoyant aussi de tamiser le mélange de poudre issu du volume de poudre d'alimentation VPA avant que ce mélange ne soit utilisé pour alimenter les différentes machines M1,M2 de l'installation, le volume de poudre neuve VPN est aussi utilisé pour compenser les agrégats de poudre rejetés, tels des déchets, par cette opération de tamisage.

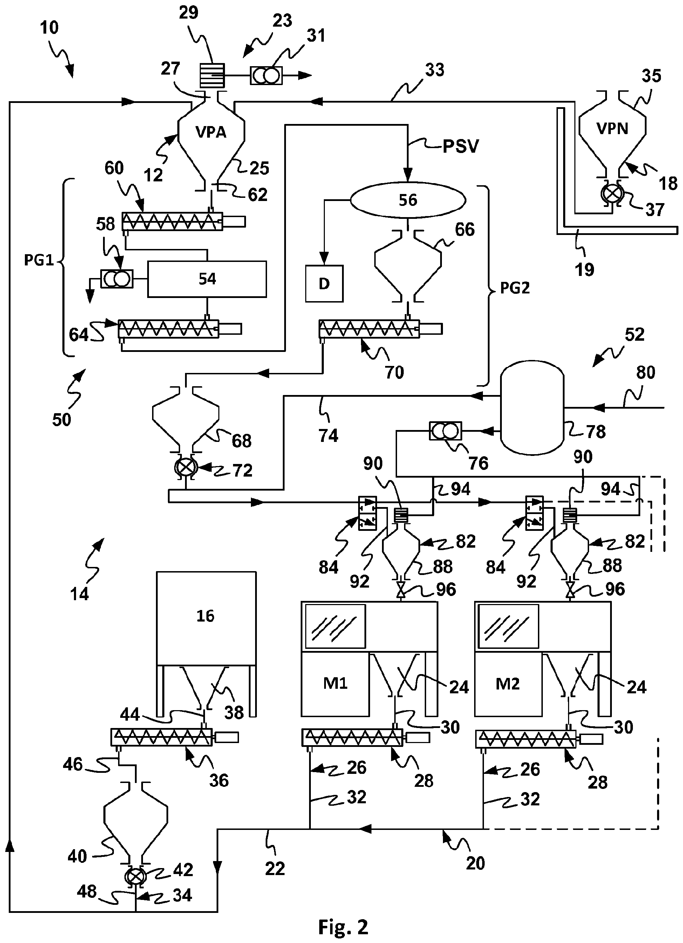

Comme illustré en figure 2, l'installation 10 pouvant être confinée dans une enceinte de protection 19 visant à éviter toute fuite de poudre toxique dans un environnement fréquenté par des opérateurs ou d'autres personnes, ce dispositif de stockage 18 de poudre neuve est de préférence disposé à l'extérieur de cette enceinte 19 afin de faciliter son réapprovisionnement ou sa manutention en vue de son remplacement par un autre dispositif de stockage rempli de poudre neuve.

Selon une caractéristique importante, l'installation 10 selon l'invention comprend un circuit de collecte 20 de la poudre excédentaire écartée par chaque dispositif de mise en couche de chaque machine M1,M2, ce circuit de collecte 20 permettant de transporter la poudre excédentaire collectée depuis chaque machine de fabrication additive M1,M2 jusqu'au volume de poudre d'alimentation VPA du dispositif de stockage 12.

En permettant de mutualiser les ressources matérielles utilisées pour recycler la poudre excédentaire générée par les différentes machines M1,M2 au sein de l'installation, le circuit de collecte 20 autorise la réalisation d'une installation 10 avec des machines M1,M2 moins coûteuses et qui demeurent plus propres plus longtemps car n'intégrant pas de système de recyclage interne de la poudre excédentaire écartée par leur dispositif de mise en couche. De plus, le fonctionnement des machines M1,M2 n'est pas perturbé par les vibrations d'un système de recyclage interne.

Plus en détail, le circuit de collecte comprend de préférence un unique conduit de collecte 22 reliant chaque machine M1,M2 de l'installation au volume de poudre d'alimentation VPA et des moyens de génération de vide 23 permettant de transporter la poudre excédentaire collectée de manière pneumatique et sous vide dans ce conduit de collecte 22.

Le transport sous vide de la poudre excédentaire est plus sûr car, en cas de fuite du conduit de collecte 22, la poudre transportée, qui peut être toxique, est maintenue à l'intérieur du circuit de collecte 20 et elle ne peut s'échapper dans un environnement où elle pourrait être inhalée par un opérateur ou une personne située à proximité de la fuite.

Avantageusement vis-à-vis du coût de l'installation 10, la poudre excédentaire collectée est transportée sous vide d'air atmosphérique. En effet, l'invention prévoyant aussi de sécher le mélange de poudre issu du volume de poudre d'alimentation VPA avant que ce mélange ne soit utilisé pour alimenter les différentes machines M1,M2 de l'installation, il n'est pas nécessaire d'utiliser de l'air sec ou un gaz pur ne contenant pas de vapeur d'eau.

De préférence, le conduit de collecte 22 communiquant avec l'enceinte 25 du dispositif de stockage 12 dans laquelle est stocké le volume de poudre d'alimentation VPA, les moyens de génération de vide 23 permettent de mettre l'enceinte 25 de ce dispositif en dépression. Plus en détail, l'enceinte 25 comprenant une ouverture 27, les moyens de génération de vide 23 comprennent un filtre de mise en dépression 29 installé sur l'ouverture 27 et relié à une pompe de mise sous vide 31.

Avantageusement, un conduit d'alimentation 33 reliant l'enceinte 35 du dispositif de stockage 18 de poudre neuve à l'enceinte 25 du dispositif de stockage 12 de poudre d'alimentation, les moyens de génération de vide 23 permettent aussi de transporter de manière pneumatique et sous vide la poudre neuve du volume de poudre neuve VPN vers le volume de poudre d'alimentation VPA. Afin de contrôler le réapprovisionnement du volume de poudre d'alimentation VPA en poudre neuve, un dispositif de régulation 37 du débit de poudre neuve, tel une vanne, est prévu entre l'enceinte 35 du dispositif de stockage 18 de poudre neuve et le conduit d'alimentation 33 en poudre neuve.

Comme l'illustrent les figures 1 et 2, chaque machine M1,M2 de l'installation 10 comprenant une sortie d'évacuation 24 de la poudre excédentaire, chaque sortie d'évacuation 24 de chaque machine M1,M2 est reliée au conduit de collecte 22 par sa propre ligne d'évacuation 26. De préférence, la poudre excédentaire est évacuée de chaque machine M1,M2 par gravité via sa sortie d'évacuation 24 et transportée par gravité dans la ligne d'évacuation 26 reliée à cette sortie.

Avantageusement, chaque ligne d'évacuation 26 de chaque machine M1,M2 comprend un dispositif de régulation 28 de débit de poudre intercalé entre la sortie d'évacuation 24 de cette machine et le conduit de collecte 20. Ainsi, les différents dispositifs de régulation 28 permettent de stopper le transfert de poudre excédentaire des machines M1,M2 vers le circuit de collecte 20 afin de limiter les temps de fonctionnement des moyens de génération de vide 23 et leur consommation électrique.

Dans l'exemple représenté en figure 2, les dispositifs de régulation de débit 28 prennent la forme d'un convoyeur à vis sans fin. Toutefois, ces dispositifs de régulation 28 peuvent aussi être des vannes simples, des vannes écluses ou tout autre dispositif apte à réguler le débit d'un produit pulvérulent transporté par gravité.

Plus précisément, chaque ligne d'évacuation 26 comprend un conduit amont 30 reliant une sortie d'évacuation 24 d'une machine M1,M2 à l'entrée du dispositif de régulation 28 et un conduit aval 32 reliant la sortie du dispositif de régulation de débit 28 au conduit de collecte 22.

De préférence, dans une installation 10 selon l'invention, les moyens de génération de vide 23 permettent de transporter la poudre excédentaire collectée en phase diluée dans le conduit de collecte 22.

Par transport en phase diluée, on entend un transport avec un gaz circulant à une haute vitesse supérieure à 9 m/s, et par exemple comprise entre 15 et 35 m/s, et avec une concentration de poudre faible, et par exemple inférieure à 10 kg de poudre/kg de gaz.

Ce transport de la poudre excédentaire en phase diluée est avantageux car il permet d'éviter l'apparition de bouchons de poudre dans le conduit de collecte 22. De plus, le débit de gaz associé à ce type de transport permet d'évacuer un lit de poudre qui se serait déposé au font du conduit de collecte 22.

Comme indiqué précédemment, l'installation 10 de fabrication additive selon l'invention comprend un dispositif de nettoyage 16 des pièces brutes PB fabriquées par les machines M1,M2 de l'installation, et ce dispositif de nettoyage 16 permet de récupérer une poudre, dite poudre de récupération, lors du nettoyage de ces pièces brutes PB. Aussi, le dispositif de nettoyage 16 est relié au circuit de collecte 20 de la poudre excédentaire de manière à introduire la poudre de récupération dans ce circuit de collecte 20. De cette façon, le conduit de collecte 22 et ses moyens de génération de vide 23 permettent de transporter la poudre excédentaire et la poudre de récupération vers le volume de poudre d'alimentation VPA.

Comme les machines M1,M2 de fabrication additive, le dispositif de nettoyage 16 est relié au conduit de collecte 22 par une ligne d'évacuation 34 au sein de laquelle la poudre de récupération est transportée par gravité.

Avantageusement, cette ligne d'évacuation 34 comprend aussi un dispositif de régulation 36 de débit de poudre de récupération intercalé entre la sortie d'évacuation 38 de poudre de récupération de ce dispositif de nettoyage 16 et le conduit de collecte 22. Ainsi, et parallèlement aux différents dispositifs de régulation de débit 28 de poudre excédentaire évacuée par les machines M1,M2, le dispositif de régulation 36 de débit de poudre de récupération permet aussi de limiter les temps de fonctionnement et la consommation électrique des moyens de génération de vide 23 du circuit de collecte 20.

Dans l'exemple représenté en figure 2, le dispositif de régulation 36 de débit de poudre de récupération prend la forme d'un convoyeur à vis sans fin. Toutefois, ce dispositif de régulation 36 peut aussi être une vanne simple, une vanne écluse ou tout autre dispositif apte à réguler le débit d'un produit pulvérulent transporté par gravité.

En complément, et en raison de l'important volume de poudre de récupération évacué par le dispositif de nettoyage 16 lors d'un cycle de nettoyage de pièces brutes PB, la ligne d'évacuation 34 de poudre de récupération comprend aussi un réservoir tampon 40 intercalé entre le dispositif de régulation 36 de débit de poudre de récupération et le conduit de collecte 22, un autre dispositif de régulation 42 de débit de poudre de récupération étant prévu en sortie de ce réservoir tampon 40 afin de contrôler le débit de poudre de récupération sortant de ce réservoir tampon 40 et transféré vers le conduit de collecte 22.

Plus en détail, la ligne d'évacuation 34 de poudre de récupération comprend un conduit amont 44 reliant la sortie d'évacuation 38 du dispositif de nettoyage 16 à l'entrée du dispositif de régulation 36, un conduit intermédiaire 46 reliant la sortie du dispositif de régulation 36 à l'entrée du réservoir tampon 40, et un conduit aval 48 reliant la sortie du dispositif de régulation 42 au conduit de collecte 22.

A la lumière de ce qui vient d'être décrit, on comprend que l'invention prévoit de distribuer aux différentes machines M1,M2 de l'installation un mélange de poudre neuve, de poudre de récupération et de poudre excédentaire. Aussi, la poudre de récupération et la poudre excédentaire pouvant contenir des agglomérats de poudre ou présenter une certaine hygrométrie, l'invention prévoit de préparer la poudre issue de ce mélange avant de la distribuer aux machines M1,M2 de l'installation.

Donc, le dispositif d'alimentation 14 de l'installation 10 comprend un premier circuit de préparation 50 de la poudre suivi d'un second circuit de distribution 52 de la poudre préparée aux différentes machines M1,M2 de l'installation, le circuit de préparation 50 reliant le volume de poudre d'alimentation VPA au circuit de distribution 52, et le circuit de distribution 52 reliant le circuit de préparation 50 à chaque machine M1,M2 de l'installation.

Toujours en vue d'éviter l'utilisation d'air comprimé, au moins une portion PG1,PG2 du circuit de préparation 50 est agencée de manière à transporter la poudre par gravité, et le circuit de préparation 50 comprend aussi des moyens de génération de vide, non illustrés en figure 2, permettant de transporter la poudre de manière pneumatique et sous vide, de préférence avec de l'air sec, dans au moins une autre portion PSV de ce circuit de préparation 50.

Une première étape de préparation de la poudre prévue par l'invention consistant à sécher la poudre, le circuit de préparation 50 comprend un dispositif de séchage 54 de la poudre.

Et, une deuxième étape de préparation de la poudre prévue par l'invention consistant à tamiser la poudre, le circuit de préparation 50 comprend un dispositif de tamisage 56 de la poudre.

De préférence, le dispositif de tamisage 56 se situe en aval du dispositif de séchage 54 dans le circuit de préparation 50 car une poudre présentant une certaine hygrométrie pourrait entraîner des dysfonctionnements du dispositif de tamisage 56, et par exemple ralentir l'écoulement de la poudre dans le dispositif de tamisage 56.

En vue de sécher la poudre jusqu'à ce que son degré d'hygrométrie égale une consigne de référence, le dispositif de séchage 54 peut prendre la forme d'un mélangeur/sécheur à rotor vertical et à double paroi isolante. Ce dispositif de séchage 54 peut être équipé d'une unité de chauffage à bain d'huile ou d'eau chaude et d'un groupe de mise sous vide 58.

Avantageusement, la mise sous vide du sécheur permet d'abaisser la température de vaporisation de l'eau et de gagner du temps en évacuant l'humidité vaporisée.

Afin d'éliminer les agglomérats ou les grains de poudre par exemple supérieurs à 50 micromètres, le dispositif de tamisage 56 comprend un tapis vibrant ayant une maille de 50 micromètres, les agglomérats ou les grains de poudre dépassant cette maille étant évacués par le dispositif de tamisage 56 en tant que déchets D.

Plus en détail, dans une première portion PG1 de transport de la poudre par gravité, le circuit de préparation 50 comprend un premier dispositif de régulation 60 de débit de poudre intercalé entre une sortie 62 de l'enceinte 25 du dispositif de stockage 12 du volume de poudre d'alimentation VPA et l'entrée du dispositif de séchage 54, et un second dispositif de régulation 64 de débit de poudre intercalé entre la sortie du dispositif de séchage 54 et l'entrée du dispositif de tamisage 56.

A titre d'exemple, le dispositif de séchage 54 travaille par lot de poudre d'environ 100 litres.

Une fois sec, le lot de poudre est transféré vers le dispositif de tamisage 56 via la portion PSV de transport pneumatique et sous vide de la poudre. De préférence, la poudre est transportée en phase dense dans la portion PSV du circuit de préparation 50.

Par transport en phase dense, on entend un transport avec un gaz circulant à une basse vitesse inférieure à 9 m/s, et par exemple comprise entre 1 et 8 m/s, et avec une concentration de poudre élevée, et par exemple supérieure à 30 kg de poudre/kg de gaz.

Puis, une fois le lot de poudre séché et tamisé, la poudre préparée est transférée vers le circuit de distribution 52 via une deuxième portion PG2 de transport de la poudre par gravité.

Plus en détail, dans cette deuxième portion PG2 de transport gravitaire du circuit de préparation 50, il est prévu un premier réservoir tampon 66 de poudre préparée et un second réservoir de dosage 68 de la poudre préparée, un premier dispositif de régulation 70 de débit de poudre étant intercalé entre le premier réservoir tampon 66 et le second réservoir de dosage 68, et un second dispositif de régulation 72 de poudre étant prévu à la sortie du second réservoir de dosage 68 et relié au circuit de distribution 52.

Bien entendu, les différents dispositifs et réservoirs du circuit de préparation 50 sont reliés par des conduites adaptées, et le circuit de préparation 50 ainsi formé est agencé de manière à permettre l'écoulement gravitaire de la poudre dans les portions PG1,PG2 concernées.

Dans l'exemple représenté en figure 2, tous les dispositifs de régulation 60,64,70 de débit de poudre du circuit de préparation 50 sont des convoyeurs à vis sans fin, à l'exception du dispositif de régulation 72 prévu en sortie du second réservoir de dosage 68 qui prend la forme d'une vanne écluse. Toutefois, ces dispositifs de régulation 60,64,70,72 peuvent aussi prendre la forme d'autres moyens connus de l'homme du métier et permettant de réguler le débit d'un produit pulvérulent.

Le dispositif de régulation 72 prévu en sortie du second réservoir de dosage 68 a pour fonction de délivrer une dose de poudre préparée au circuit de distribution 52 afin que cette dose, par exemple de 2,5 litres, soit acheminée vers une machine M1,M2 de l'installation 10 par le circuit de distribution 52.

Aussi, le circuit de distribution 52 comprend un conduit de distribution 74 relié au circuit de préparation 50 et à chaque machine M1,M2 de l'installation 10, et des moyens de génération de vide 76 permettant de transporter la poudre de manière pneumatique et sous vide dans ce conduit de distribution 74. De préférence, la poudre est transportée de manière pneumatique et sous vide d'air sec ou d'un gaz pur et inerte tel l'azote dans ce conduit de distribution 74 afin d'éviter de dégrader les caractéristiques hygrométriques et granulométriques de la poudre séchée et tamisée.

Afin d'économiser le gaz de transport, et notamment lorsqu'il s'agit d'un gaz de transport séché ou pur et inerte comme l'azote, le circuit de distribution 52 est de préférence un circuit fermé.

Donc, le conduit de distribution 74 forme une boucle fermée à laquelle est raccordée la sortie du dispositif de régulation 72 prévu en sortie du second réservoir de dosage 68 du circuit de préparation 50, et à laquelle sont raccordées les différentes machines M1,M2 de l'installation.

Plus en détail, le conduit de distribution 74 forme une boucle fermée partant et revenant vers un ballon tampon 78 en passant par les moyens de génération de vide 76. Avantageusement, le ballon tampon 78 comprend une double enveloppe lui permettant de condenser l'eau éventuellement contenue dans le gaz de transport et de l'évacuer hors du circuit de distribution 52. Bien entendu, et bien que le circuit de distribution 52 soit un circuit fermé, il est aussi prévu une alimentation 80 du ballon tampon 78 en gaz de transport.

De préférence, la poudre est aussi transportée en phase diluée dans le circuit de de distribution 52. Toutefois, dans le cas où la poudre est transportée par petits volumes dans ce circuit de distribution 52, comme par exemple lorsque le dispositif de régulation 72 prévu en sortie du circuit de préparation 50 délivre des doses de 2,5 litres de poudre dans le conduit de distribution 74, un transport en phase semi-diluée est envisageable.

Par transport en phase semi-diluée, on entend un transport avec un gaz circulant à une vitesse intermédiaire, se situant par exemple autour de 9 m/s, et avec une concentration de poudre intermédiaire, et par exemple comprise entre 10 et 30 kg de poudre/kg de gaz.

La poudre en cours de distribution étant mélangée au gaz de transport dans le conduit 74 du circuit de distribution 52, chaque machine M1,M2 de l'installation est reliée à ce conduit 74 via un dispositif de séparation 82 permettant de séparer la poudre du gaz de transport.

Plus en détail, un tel dispositif de séparation 82 comprend un distributeur 84 inséré dans le circuit de distribution 52, une trémie de réception 88 du mélange de poudre et de gaz de transport, et un filtre de mise en dépression 90. Le distributeur 84 peut prendre deux positions : une position de dérivation dans laquelle il dévie le mélange de poudre et de gaz de transport vers la trémie de réception 88 via un conduit de dérivation 92, et une position neutre dans laquelle il laisse circuler le mélange de poudre et de gaz de transport dans le conduit de distribution 74 et vers les autres machines M1,M2 de l'installation.

De préférence, la trémie de réception 88 comprend des moyens permettant de séparer la poudre du gaz de transport par effet cyclonique, le gaz de transport étant reconduit dans le conduit de distribution 74 via un raccord 94, et la poudre étant stockée dans cette trémie de réception 88 afin d'alimenter la machine de fabrication additive à laquelle elle est reliée via un dispositif de régulation 96 de débit de poudre.

De manière plus générale, l'invention couvre aussi un procédé de gestion d'une poudre au sein d'une installation 10 de fabrication additive telle que celle vient d'être décrite par exemple. Bien entendu, ce procédé de gestion présente les mêmes avantages que l'installation 10 qui vient d'être décrite.

Cette installation 10 comprenant une pluralité de machines M1,M2 de fabrication additive, le procédé de gestion prévoit de stocker un volume de poudre d'alimentation VPA et d'alimenter automatiquement en poudre les différentes machines M1,M2 de l'installation à partir de ce volume de poudre d'alimentation VPA.

Sachant que la poudre délivrée à chaque machine M1,M2 subit au moins une mise en couche au cours d'un cycle de fabrication additive mis en oeuvre dans cette machine M1,M2, et que cette opération de mise en couche s'effectue en déposant la poudre en excès et en écartant la partie excédentaire de la poudre déposée, dite poudre excédentaire, le procédé de gestion prévoit de collecter la poudre excédentaire écartée au sein de chaque machine M1,M2 de l'installation 10 et de conduire la poudre excédentaire collectée depuis chaque machine M1,M2 jusqu'au volume de poudre d'alimentation VPA.

Afin d'éviter les fuites de poudre dans l'environnement extérieur au conduit utilisé pour transporter la poudre excédentaire collectée, le procédé de gestion prévoit que la poudre excédentaire collectée auprès de chaque machine M1,M2 est transportée de manière pneumatique et sous vide jusqu'au volume de poudre d'alimentation VPA, et de préférence sous vide d'air atmosphérique car le procédé de gestion prévoit aussi de sécher la poudre alimentant les machines de l'installation.

Afin d'éviter les risques d'obturation d'un conduit utilisé pour transporter la poudre excédentaire collectée, le procédé de gestion prévoit que la poudre excédentaire collectée auprès de chaque machine M1,M2 est transportée en phase diluée jusqu'au volume de poudre d'alimentation VPA.

Parallèlement au recyclage de la poudre excédentaire, le procédé de gestion prévoit aussi de réintroduire une poudre de récupération issue du nettoyage des pièces brutes PB fabriquées par les machines M1,M2 de l'installation dans le volume de poudre d'alimentation VPA.

Toujours afin d'éviter les fuites de poudre dans l'environnement extérieur au circuit utilisé pour transporter la poudre, le procédé de gestion prévoit que la poudre est transportée de manière gravitaire ou de manière pneumatique et sous vide depuis le volume de poudre d'alimentation VPA jusqu'à chaque machine M1,M2 de l'installation.

De plus, lorsque la poudre est transportée de manière pneumatique et sous vide depuis le volume de poudre d'alimentation VPA jusqu'à chaque machine M1,M2 de l'installation, le procédé prévoit d'utiliser de l'air sec ou un gaz inerte comme gaz de transport afin d'éviter d'augmenter l'hygrométrie de la poudre.

Afin de réapprovisionner le volume de poudre d'alimentation VPA quand cela est nécessaire, le procédé de gestion prévoit d'introduire de la poudre neuve dans le volume de poudre d'alimentation VPA.

Il ressort de ce qui précède que le procédé de gestion selon l'invention prévoit d'alimenter différentes machines M1,M2 d'une installation avec un mélange de poudre neuve, de poudre de récupération issue du nettoyage des pièce brutes PB fabriquées par ces différentes machines, et de poudre excédentaire évacuée par les différentes machines de l'installation.

Aussi, et afin de fournir aux machines M1,M2 de l'installation une poudre ayant les qualités requises en terme de granulation, le procédé de gestion prévoit de tamiser la poudre entre le volume de poudre d'alimentation VPA et chaque machine M1,M2 de l'installation.

Et, dans l'objectif de fournir aux machines M1,M2 de l'installation une poudre ayant les qualités requises en terme d'hygrométrie, le procédé de gestion prévoit de tamiser la poudre entre le volume de poudre d'alimentation VPA et chaque machine M1,M2 de l'installation.

## Revendications

1. Procédé de gestion d'une poudre au sein d'une installation (10) de fabrication additive comprenant une pluralité de machines (M1,M2) de fabrication additive, le procédé de gestion prévoyant de stocker un volume de poudre d'alimentation (VPA) et d'alimenter automatiquement en poudre les différentes machines (M1,M2) de l'installation à partir de ce volume de poudre d'alimentation (VPA), la poudre délivrée à chaque machine (M1,M2) subissant au moins une mise en couche au cours d'un cycle de fabrication additive mis en oeuvre dans cette machine (M1,M2), et cette opération de mise en couche s'effectuant en déposant la poudre en excès et en écartant la partie excédentaire de la poudre déposée, dite poudre excédentaire, le procédé de gestion prévoyant de collecter la poudre excédentaire écartée au sein de chaque machine (M1,M2) de l'installation et de conduire la poudre excédentaire collectée depuis chaque machine (M1,M2) jusqu'au volume de poudre d'alimentation (VPA), le procédé de gestion prévoyant en outre de réintroduire dans le volume de poudre d'alimentation (VPA) une poudre de récupération issue du nettoyage des pièces brutes (PB) fabriquées par les machines (M1,M2) de l'installation, le procédé de gestion prévoyant de conduire via un même circuit de collecte (20) la poudre excédentaire et la poudre de récupération jusqu'au volume de poudre d'alimentation (VPA), le procédé de gestion étant **caractérisé en ce qu'**il prévoit de distribuer aux différentes machines (M1,M2) de l'installation un mélange de poudre neuve, de poudre de récupération et de poudre excédentaire, et **en ce qu'**il prévoit de préparer la poudre issue de ce mélange avant de la distribuer aux machines (M1,M2) de l'installation, la poudre étant séchée entre le volume de poudre d'alimentation (VPA) et chaque machine (M1,M2) de l'installation, et la poudre étant tamisée entre le volume de poudre d'alimentation (VPA) et chaque machine (M1,M2) de l'installation.

2. Procédé de gestion selon la revendication 1, dans lequel la poudre excédentaire collectée auprès de chaque machine (M1,M2) est transportée de manière pneumatique et sous vide jusqu'au volume de poudre d'alimentation (VPA).

3. Procédé de gestion selon la revendication 2, dans lequel la poudre excédentaire collectée auprès de chaque machine (M1,M2) est transportée en phase diluée jusqu'au volume de poudre d'alimentation (VPA).

4. Procédé de gestion selon l'une des revendications précédentes, dans lequel la poudre est transportée de manière gravitaire ou de manière pneumatique et sous vide depuis le volume de poudre d'alimentation (VPA) jusqu'à chaque machine (M1,M2) de l'installation.

5. Procédé de gestion selon la revendication 4, dans lequel la poudre est transportée avec de l'air sec ou un gaz inerte lorsqu'elle est transportée de manière pneumatique et sous vide depuis le volume de poudre d'alimentation (VPA) jusqu'à chaque machine (M1,M2) de l'installation.

6. Procédé de gestion selon l'une des revendications précédentes, dans lequel de la poudre neuve est introduite dans le volume de poudre d'alimentation (VPA).

7. Installation (10) de fabrication additive comprenant une pluralité de machines (M1,M2) de fabrication additive, l'installation (10) comprenant un dispositif de stockage (12) d'un volume de poudre d'alimentation (VPA) et un dispositif d'alimentation (14) alimentant automatiquement en poudre les différentes machines (M1,M2) de l'installation à partir de ce volume de poudre d'alimentation (VPA), chaque machine (M1,M2) de fabrication additive comprenant un dispositif de mise en couche de la poudre délivrée à cette machine, et chaque dispositif de mise en couche de chaque machine déposant la poudre en excès et écartant la partie excédentaire de la poudre déposée, dite poudre excédentaire, l'installation (10) comprenant un circuit de collecte (20) de la poudre excédentaire écartée par chaque dispositif de mise en couche de chaque machine (M1,M2), ce circuit de collecte permettant de transporter la poudre excédentaire collectée depuis chaque machine (M1,M2) jusqu'au volume de poudre d'alimentation (VPA), l'installation (10) comprenant en outre un dispositif de nettoyage (16) des pièces brutes (PB) fabriquées par les machines (M1,M2) de l'installation et permettant de récupérer une poudre, dite poudre de récupération, lors du nettoyage de ces pièces, le dispositif de nettoyage (16) étant relié au circuit de collecte (20) de la poudre excédentaire de manière à introduire la poudre de récupération dans ce circuit de collecte (20), l'installation (10) étant **caractérisée en ce que** le dispositif d'alimentation (14) comprend un premier circuit de préparation (50) de la poudre suivi d'un second circuit de distribution (52) de la poudre préparée aux différentes machines (M1,M2) de l'installation, le circuit de préparation (50) reliant le volume de poudre d'alimentation (VPA) au circuit de distribution (52), et le circuit de distribution (52) reliant le circuit de préparation (50) à chaque machine (M1,M2) de l'installation, et **en ce que** le circuit de préparation (50) comprend un dispositif de séchage (54) de la poudre et un dispositif de tamisage (56) de la poudre.

8. Installation (10) de fabrication additive selon la revendication 7, dans laquelle le circuit de collecte (20) comprend un unique conduit de collecte (22) reliant chaque machine (M1,M2) de l'installation au volume de poudre d'alimentation (VPA) et des moyens de génération de vide (23) permettant de transporter la poudre excédentaire collectée de manière pneumatique et sous vide dans ce conduit de collecte.

9. Installation (10) de fabrication additive selon la revendication 8, dans laquelle les moyens de génération de vide (23) permettent de transporter la poudre excédentaire collectée en phase diluée dans le conduit de collecte (22).

10. Installation (10) de fabrication additive l'une des revendications 7 à 9, dans laquelle au moins une portion (PG1,PG2) du circuit de préparation (50) est agencée de manière à transporter la poudre par gravité, et dans laquelle le circuit de préparation (50) comprend aussi des moyens de génération de vide permettant de transporter la poudre de manière pneumatique et sous vide dans au moins une autre portion (PSV) de ce circuit de préparation (50).

11. Installation (10) de fabrication additive selon l'une des revendications 7 à 10, dans laquelle le circuit de distribution (52) comprend un conduit de distribution (74) relié au circuit de préparation (50) et à chaque machine (M1,M2) de l'installation, et des moyens de génération de vide (76) permettant de transporter la poudre de manière pneumatique et sous vide dans ce conduit de distribution (74).

12. Installation (10) de fabrication additive selon la revendication 11, dans laquelle le circuit de distribution (52) est un circuit fermé.

13. Installation (10) de fabrication additive selon l'une des revendications 7 à 12, comprenant en outre un dispositif de stockage (18) d'un volume de poudre neuve (VPN) relié au dispositif de stockage (12) du volume de poudre d'alimentation (VPA).

## Patentansprüche

1. Verfahren zur Verwaltung eines Pulvers innerhalb einer Anlage (10) zur additiven Fertigung, die eine Vielzahl von Maschinen (M1, M2) zur additiven Fertigung enthält, wobei das Verwaltungsverfahren vorsieht, eine Zufuhrpulvermenge (VPA) zu speichern und den verschiedenen Maschinen (M1, M2) der Anlage ausgehend von dieser Zufuhrpulvermenge (VPA) automatisch Pulver zuzuführen, wobei das an jede Maschine (M1, M2) gelieferte Pulver während eines in dieser Maschine (M1, M2) durchgeführten Zyklus der additiven Fertigung mindestens eine Schichtung erfährt, und dieser Schichtungsvorgang erfolgt, indem das Pulver im Überschuss aufgebracht wird und indem der überschüssige Teil des aufgebrachten Pulvers, überschüssiges Pulver genannt, beseitigt wird, wobei das Verwaltungsverfahren vorsieht, das beseitigte überschüssige Pulver innerhalb jeder Maschine (M1, M2) der Anlage zu sammeln und das gesammelte überschüssige Pulver von jeder Maschine (M1, M2) bis zur Zufuhrpulvermenge (VPA) zu führen, wobei das Verwaltungsverfahren außerdem vorsieht, ein von der Reinigung der von den Maschinen (M1, M2) der Anlage gefertigten Rohbauteile (PB) stammendes Rückgewinnungspulver wieder in die Zufuhrpulvermenge (VPA) einzuführen, wobei das Verwaltungsverfahren vorsieht, das überschüssige Pulver und das Rückgewinnungspulver über einen gleichen Sammelkreislauf (20) bis zur Zufuhrpulvermenge (VPA) zu führen, wobei das Verwaltungsverfahren **dadurch gekennzeichnet ist, dass** es vorsieht, an die verschiedenen Maschinen (M1, M2) der Anlage eine Mischung aus neuem Pulver, Rückgewinnungspulver und überschüssigem Pulver zu verteilen, und dass es vorsieht, das von dieser Mischung stammende Pulver aufzubereiten, ehe es an die Maschinen (M1, M2) der Anlage verteilt wird, wobei das Pulver zwischen der Zufuhrpulvermenge (VPA) und jeder Maschine (M1, M2) der Anlage getrocknet wird, und das Pulver zwischen der Zufuhrpulvermenge (VPA) und jeder Maschine (M1, M2) der Anlage gesiebt wird.

2. Verwaltungsverfahren nach Anspruch 1, wobei das in jeder Maschine (M1, M2) gesammelte überschüssige Pulver pneumatisch und vakuumiert bis zur Zufuhrpulvermenge (VPA) transportiert wird.

3. Verwaltungsverfahren nach Anspruch 2, wobei das in jeder Maschine (M1, M2) gesammelte überschüssige Pulver in verdünnter Phase bis zur Zufuhrpulvermenge (VPA) transportiert wird.

4. Verwaltungsverfahren nach einem der vorhergehenden Ansprüche, wobei das Pulver durch Schwerkraft oder pneumatisch und vakuumiert von der Zufuhrpulvermenge (VPA) bis zu jeder Maschine (M1, M2) der Anlage transportiert wird.

5. Verwaltungsverfahren nach Anspruch 4, wobei das Pulver mit trockener Luft oder einem Inertgas transportiert wird, wenn es pneumatisch und vakuumiert von der Zufuhrpulvermenge (VPA) bis zu jeder Maschine (M1, M2) der Anlage transportiert wird.

6. Verwaltungsverfahren nach einem der vorhergehenden Ansprüche, wobei neues Pulver in die Zufuhrpulvermenge (VPA) eingeführt wird.

7. Anlage (10) zur additiven Fertigung, die eine Vielzahl von Maschinen (M1, M2) zur additiven Fertigung enthält, wobei die Anlage (10) eine Speichervorrichtung (12) einer Zufuhrpulvermenge (VPA) und eine Zufuhrvorrichtung (14) enthält, die den verschiedenen Maschinen (M1, M2) der Anlage ausgehend von dieser Zufuhrpulvermenge (VPA) automatisch Pulver zuführt, wobei jede Maschine (M1, M2) zur additiven Fertigung eine Vorrichtung zur Schichtung des an diese Maschine gelieferten Pulvers enthält, und jede Schichtungsvorrichtung jeder Maschine das Pulver im Überschuss aufbringt und den überschüssigen Teil des aufgebrachten Pulvers, überschüssiges Pulver genannt, beseitigt, wobei die Anlage (10) einen Sammelkreislauf (20) des von jeder Schichtungsvorrichtung jeder Maschine (M1, M2) beseitigten überschüssigen Pulvers enthält, wobei dieser Sammelkreislauf es ermöglicht, das gesammelte überschüssige Pulver von jeder Maschine (M1, M2) bis zur Zufuhrpulvermenge (VPA) zu transportieren, wobei die Anlage (10) außerdem eine Reinigungsvorrichtung (16) der von den Maschinen (M1, M2) der Anlage gefertigten Rohbauteile (PB) enthält, die es ermöglicht, bei der Reinigung dieser Bauteile ein Pulver rückzugewinnen, Rückgewinnungspulver genannt, wobei die Reinigungsvorrichtung (16) mit dem Sammelkreislauf (20) des überschüssigen Pulvers verbunden ist, um das Rückgewinnungspulver in diesen Sammelkreislauf (20) einzuführen, wobei die Anlage (10) **dadurch gekennzeichnet ist, dass** die Versorgungsvorrichtung (14) einen ersten Aufbereitungskreislauf (50) des Pulvers gefolgt von einem zweiten Verteilungskreislauf (52) des aufbereiteten Pulvers an die verschiedenen Maschinen (M1, M2) der Anlage enthält, wobei der Aufbereitungskreislauf (50) die Zufuhrpulvermenge (VPA) mit dem Verteilungskreislauf (52) verbindet, und der Verteilungskreislauf (52) den Aufbereitungskreislauf (50) mit jeder Maschine (M1, M2) der Anlage verbindet, und dass der Aufbereitungskreislauf (50) eine Trocknungsvorrichtung (54) des Pulvers und eine Siebevorrichtung (56) des Pulvers enthält.

8. Anlage (10) zur additiven Fertigung nach Anspruch 7, wobei der Sammelkreislauf (20) eine einzige Sammelleitung (22), die jede Maschine (M1, M2) der Anlage mit der Zufuhrpulvermenge (VPA) verbindet, und Vakuumerzeugungseinrichtungen (23) enthält, die es ermöglichen, das gesammelte überschüssige Pulver pneumatisch und vakuumiert in dieser Sammelleitung zu transportieren.

9. Anlage (10) zur additiven Fertigung nach Anspruch 8, wobei die Vakuumerzeugungseinrichtungen (23) es ermöglichen, das gesammelte überschüssige Pulver in verdünnter Phase in der Sammelleitung (22) zu transportieren.

10. Anlage (10) zur additiven Fertigung nach einem der Ansprüche 7 bis 9, wobei mindestens ein Abschnitt (PG1, PG2) des Aufbereitungskreislaufs (50) so eingerichtet ist, dass er das Pulver durch Schwerkraft transportiert, und wobei der Aufbereitungskreislauf (50) auch Vakuumerzeugungseinrichtungen enthält, die es ermöglichen, das Pulver pneumatisch und vakuumiert in mindestens einen anderen Abschnitt (PSV) dieses Aufbereitungskreislaufs (50) zu transportieren.

11. Anlage (10) zur additiven Fertigung nach einem der Ansprüche 7 bis 10, wobei der Verteilungskreislauf (52) eine Verteilungsleitung (74), die mit dem Aufbereitungskreislauf (50) und mit jeder Maschine (M1, M2) der Anlage verbunden ist, und Vakuumerzeugungseinrichtungen (76) enthält, die es ermöglichen, das Pulver pneumatisch und vakuumiert in dieser Verteilungsleitung (74) zu transportieren.

12. Anlage (10) zur additiven Fertigung nach Anspruch 11, wobei der Verteilungskreislauf (52) ein geschlossener Kreislauf ist.

13. Anlage (10) zur additiven Fertigung nach einem der Ansprüche 7 bis 12, die außerdem eine Speichervorrichtung (18) einer Menge neuen Pulvers (VPN) enthält, die mit der Speichervorrichtung (12) der Zufuhrpulvermenge (VPA) verbunden ist.

## Claims

1. Method for managing a powder within an additive manufacturing facility (10) comprising a plurality of additive manufacturing machines (M1,M2), the management method comprising storing a volume of feedstock powder (VPA) and automatically feeding the various machines (M1,M2) of the facility with powder from this volume of feedstock powder (VPA), the powder delivered to each machine (M1,M2) undergoing at least one layering during an additive manufacturing cycle implemented in this machine (M1,M2), and this layering operation taking place with powder being deposited in excess and the excess portion of the powder deposited, referred to as excess powder, being moved away, the management method comprising collecting the excess powder moved away within each machine (M1,M2) of the facility and conveying the excess powder collected from each machine (M1,M2) to the volume of feedstock powder (VPA), the management method also comprising reintroducing a powder, referred to as recoverded powder, derived from the cleaning of the rough components (PB) manufactured by the machines (M1 ,M2) of the facility into the volume of feedstock powder (VPA), the management method comprising conveying the excess powder and the recovered powder via a single collection circuit (20) to the volume of feedstock powder (VPA), the management method being **characterized in that** said management method comprises distributing to the various machines (M1,M2) of the facility a mixture of fresh powder, recovered powder, and excess powder, and **in that** said management method comprises preparing the powder derived from this mixture before distributing it to the machines (M1,M2) of the installation, the powder being dried between the volume of feedstock powder (VPA) and each machine (M1,M2) of the facility, and the powder being sifted between the volume of feedstock powder (VPA) and each machine (M1,M2) of the facility.

2. Management method according to Claim 1, in which the excess powder collected at each machine (M1,M2) is transported pneumatically and under vacuum until attaining the volume of feedstock powder (VPA).

3. Management method according to Claim 2, in which the excess powder collected at each machine (M1,M2) is transported in diluted phase until attaining the volume of feedstock powder (VPA).

4. Management method according to one of the preceding claims, in which the powder is transported under gravity or pneumatically and under vacuum from the volume of feedstock powder (VPA) until attaining each machine (M1,M2) of the facility.

5. Management method according to Claim 4, in which the powder is transported with dry air or an inert gas when transported pneumatically and under vacuum from the volume of feedstock powder (VPA) until attaining each machine (M1,M2) of the facility.

6. Management method according to one of the preceding claims, in which fresh powder is introduced into the volume of feedstock powder (VPA).

7. Additive manufacturing facility (10) comprising a plurality of additive manufacturing machines (M1,M2), the facility (10) comprising a device (12) for storing a volume of feedstock powder (VPA) and a feed device (14) automatically feeding the various machines (M1,M2) of the facility with powder from this volume of feedstock powder (VPA), each additive manufacturing machine (M1,M2) comprising a device for layering the powder delivered to this machine, and each layering device of each machine depositing the powder in excess and moving away the excess portion of the powder deposited, referred to as the excess powder, the facility (10) comprising a collection circuit (20) for the excess powder moved away by each layering device of each machine (M1,M2), this collection circuit allowing the excess powder collected from each machine (M1,M2) to be transported until attaining the volume of feedstock powder (VPA), and the facility (10) further comprising a cleaning device (16) for cleaning the rough components (PB) manufactured by the machines (M1,M2) of the facility and allowing a powder, referred to as recovered powder, to be recovered during the cleaning of these components, the cleaning device (16) being connected to the collection circuit (20) that collects the excess powder, so that the recovered powder is introduced into this collection circuit (20), the facility (10) being **characterized in that** the feed device (14) comprises a first, powder-preparation, circuit (50), followed by a second, powder-distribution, circuit (52) distributing the prepared powder to the various machines (M1,M2) of the facility, the preparation circuit (50) connecting the volume of feedstock powder (VPA) to the distribution circuit (52), and the distribution circuit (52) connecting the preparation circuit (50) to each machine (M1,M2) of the facility, and **in that** the preparation circuit (50) comprises a powder drying device (54) and a powder sifting device (56).

8. Additive manufacturing facility (10) according to Claim 7, in which the collection circuit (20) comprises a single collecting duct (22) connecting each machine (M1,M2) of the facility to the volume of feedstock powder (VPA) and vacuum generating means (23) making it possible to transport the excess powder collected pneumatically and under vacuum in this collecting duct.

9. Additive manufacturing facility (10) according to Claim 8, in which the vacuum generating means (23) allow the excess powder collected to be transported in a dilute phase in the collecting duct (22).

10. Additive manufacturing facility (10) according to one of Claims 7 to 9, in which at least one portion (PG1,PG2) of the preparation circuit (50) is set out in such a way as to transport the powder under gravity, and in which the preparation circuit (50) also comprises vacuum-generating means allowing the powder to be transported pneumatically and under vacuum in at least one other portion (PSV) of this preparation circuit (50).

11. Additive manufacturing facility (10) according to one of Claims 7 to 10, in which the distribution circuit (52) comprises a distribution duct (74) connected to the preparation circuit (50) and to each machine (M1,M2) of the facility, and vacuum-generating means (76) allowing the powder to be transported pneumatically and under vacuum in this distribution duct (74).

12. Additive manufacturing facility (10) according to Claim 11, in which the distribution circuit (52) is a closed circuit.

13. Additive manufacturing facility (10) according to one of Claims 7 to 12, further comprising a device (18) for storing a volume of fresh powder (VPN), which is connected to the device (12) for storing the volume of feedstock powder (VPA).
